# EUROPEAN PATENT SPECIFICATION

(11) **EP 1 225 186 B1**
(45) Date of publication and mention of the grant of the patent: **20.04.2005**
(21) Application number: 99921260.8
(22) Date of filing: 25.05.1999
(51) Int. Cl.: C08F 8/26, C08F 10/10

(54) **SATURATED HYDROCARBON POLYMER HAVING PRIMARY HYDROXYL GROUP AT ITS END AND PROCESS FOR PRODUCING THE SAME**
GESÄTTIGTES KOHLENWASSERSTOFFPOLYMER MIT PRIMÄRER HYDROXYLENDGRUPPE UND VERFAHREN ZU DESSEN HERSTELLUNG
POLYMERE D'HYDROCARBURE SATURE POSSEDANT UN GROUPE HYDROXYLE PRIMAIRE A UNE EXTREMITE ET SON PROCEDE DE PRODUCTION

(43) Date of publication of application: 24.07.2002
(73) Proprietor: KANEKA CORPORATION, Osaka-shi, Osaka 530-8288 (JP)
(72) Inventor: CHIBA, Takeshi, Kobe Res. Lab. Res. Inst., Kobe-shi, Hyogo 652-0872 (JP); TSUNEMI, Hidenari, Kobe Res. Lab. Res. Inst., Kobe-shi, Hyogo 652-0872 (JP)
(74) Representative: VOSSIUS & PARTNER
(86) International application number: PCT/JP1999/002741
(87) International publication number: WO 2000/071588

(56) References cited:
- EP-A- 0 992 519
- WO-A-00/32645
- JP-A- 1 103 605
- US-A- 4 316 973
- US-A- 4 342 849
- US-A- 5 589 543
- PATENT ABSTRACTS OF JAPAN vol. 016, no. 400 (C-0977), 25 August 1992 (1992-08-25) & JP 04 132706 A (NIPPON SHOKUBAI CO LTD), 7 May 1992 (1992-05-07)
- B. IVAN, J.P. KENNEDY, V.S.C. CHANG J. POLYM. SCI. POLYM. CHEM. ED. vol. 18, 1980, pages 3177 - 3191, XP002926329

## Description

The present invention relates to a novel hydrocarbon polymer of which a polymer main chain is a saturated hydrocarbon chain and terminally having a primary hydroxyl group (hereinafter referred to sometimes as a saturated hydrocarbon polymer terminally having a primary hydroxyl group) and a production method of the same.

It is generally known that a saturated hydrocarbon polymer terminally having a hydroxyl group can be obtained by hydrogenating a polybutadiene polyol or polyisoprene polyol synthesized by anionic polymerization. In living anionic polymerization, a primary hydroxyl group can be easily and quantitatively introduced terminally by reacting ethylene oxide after completion of polymerization.

Such a hydroxyl group-terminated saturated hydrocarbon polymer reacts easily with an isocyanate compound to give a urethane cured product. By utilizing this polymer, it is known that performance characteristics such as weathering resistance and chemical resistance which are of importance to urethane compositions composed of polyether or polyester polyols can be improved. However, the various durability features of urethane compositions using these hydroxyl group-terminated saturated hydrocarbon polymers cannot be said to be fully satisfactory as yet. There also is the problem that the production of a hydroxyl group-terminated polyol requires a step of hydrogenation which is not easy to carry out.

Meanwhile, as a saturated hydrocarbon polymer expected to have high weathering resistance, a polyisobutylene obtainable by cationic polymerization is known. Particularly, the reaction for quantitatively introducing a functional group into a polyisobutylene terminus by living cationic polymerization is known. J. P. Kennedy et al. disclose a method which comprises synthesizing a polyisobutylene terminally having a chlorine group by living cationic polymerization in the first place, then carrying out a terminal dehydrochlorination reaction with ^{t}BuOK to derive to a terminal isopropenyl group, and quantitatively introducing a hydroxyl group terminally by using BH₃ or a hydride-borane reagent such as 9-BBN and hydrogen peroxide (e.g. B. Ivan, J. P. Kennedy, and V. S. C. Chang, J. Polym. Sci., Polym. Chem. Ed., 1980, 18, 3177 and B. Ivan, and J. P. Kennedy, Polym. Mater. Sci. Eng., 1988, 58, 866, etc.). Furthermore, J. P. Kennedy et al. report that a urethane resin obtainable by reacting a hydroxyl group-terminated polyisobutylene with a compound having a plurality of isocyanato group exhibits high weathering resistance.

However, in this method, the chlorine terminus of the polyisobutylene obtainable by living cationic polymerization is required to be first converted to an olefin terminus which is then converted to a hydroxyl group. Furthermore, the starting material employed is quiteparticular and, therefore, thismethod is not suitable for commercial-scale production of saturated hydrocarbon polyols.

The object of the present invention is to provide a novel saturated hydrocarbon polymer terminally having a primary hydroxyl group by introducing a primary hydroxyl group into a halogen terminus of a saturated hydrocarbon polymer obtainable by cationic polymerization in a one-step reaction without using a particular and expensive raw material such as the hydride-borane reagent and a production method of said novel polymer.

The present invention relates to a hydrocarbon polymer of which a polymer main chain is a saturated hydrocarbon chain and which terminally has a primary hydroxyl group
which is obtainable by reacting a halogen-terminated hydrocarbon polymer with a compound having both a primary hydroxyl group and a carbon-carbon double bond,
said halogen-terminated hydrocarbon polymer being obtainable by cationic polymerization forming a carbon-carbon single bond.

Many reports are available related to the reaction of a polyisobutylene terminally having a halogen group obtainable by living cationic polymerization using a polymerization initiator (inifer method) with another substrate to introduce a functional group into the terminus. As a method for inserting an olefin between the chlorine-carbon bond at the polyisobutylene terminus, the reaction system, for example, in which a conjugated or a non-conjugated diene is reacted with the polymer terminus using a Lewis acid as a catalyst in methylene chloride/hexane mixed solvent system at -80°C to -30°C (USP 5212248, Japanese Kokai Publication Hei-4-288309, etc.) is known. When a conjugated diene such as butadiene is used, there is obtained an allyl halide terminus which is expected to be highly reactive. A hydroxyl group terminus is expected to be obtained by further hydrolysis reaction of the terminus. However, this method cannot give a hydroxyl group terminus in one step from the halogen-terminated polyisobutylene. Therefore, the inventors of the present invention did extensive studies and ultimately developed the present invention.

The hydrocarbon polymer of which a polymer main chain is a saturated hydrocarbon chain in the context of the present invention means a hydrocarbon polymer not containing a C-C double bond in the main chain (that is to say a saturated polymer) which is obtainable by cationic polymerization forming a carbon-carbon single bond but may contain a C-C double bond in a graft group pendent from the main chain. Moreover, the polymerization initiator for use in the cationic polymerization may contain a C-C double bond.

The saturated hydrocarbon polymer terminally having a primary hydroxyl group is preferably a polymer obtainable by reacting a halogen-terminated hydrocarbon polymer obtainable by cationic polymerization represented by the formula (1):

R¹(A-X)ₐ (1)

(in the formula, R¹ represents a univalent to tetravalent hydrocarbon group containing one or more aromatic rings; X represents a chlorine or bromine atom; a represents an integer of 1 to 4; A represents a polymer of one or two or more cation-polymerizable monomers and when a is not less than 2, A may be the same or different)
with a compound having both a primary hydroxyl group and a carbon-carbon double bond as represented by the formula (2) :

CH₂=C(R²)-B-CH₂OH (2)

(in the formula, R² represents a hydrogen or a saturated hydrocarbon group of 1 to 18 carbon atoms and B represents a direct bond or a bivalent hydrocarbon group of 1 to 30 carbon atoms).

The compound of the above formula (2) is more preferably a compound represented by the formula (3):

CH₂=C(R²)-(CH₂)ₙ-CH₂OH (3)

(in the formula, R² represents a hydrogen or a saturated hydrocarbon group of 1 to 18 carbon atoms and n represents an integer of 0 through 30).

The cation-polymerizable monomer in the above formula (1) is not particularly restricted but includes such preferred monomers as isobutylene, indene, pinene, styrene, methoxystyrene and chlorostyrene, for example.

When the polymer of the invention is used as a raw material for a curable composition, it is preferably an isobutylene polymer which is liquid before crosslinking but may give a rubber-like cured product after crosslinking.

The isobutylene polymer may be one in which all monomer units are formed from isobutylene units but may contain monomer units copolymerizable with isobutylene in a range of preferably not more than 50% (weight %, the same applies hereunder), more preferably not more than 30%, still more preferably not more than 10%, based on isobutylene polymer.

As such monomer components, there can be mentioned olefins of 4 to 12 carbon atoms, vinyl ethers, aromatic vinyl compounds, vinylsilanes, and allylsilanes, for example. As such copolymerizable components, there can be mentioned, for example, 1-butene, 2-butene, 2-methyl-1-butene, 3-methyl-1-butene, pentene, 4-methyl-1-pentene, hexene, vinylcyclohexene, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane and γ-methacryloyloxypropylmethyldimethoxysilane.

In the present invention, by causing the terminal hydroxyl group introduced to react with a polyfunctional isocyanate compound, a urethane crosslinked product can be obtained, but in order to obtain a crosslinked product showing sufficient strength, weathering resistance, gel fraction and other characteristics by crosslinking reaction, it is preferable that, in said formula (1), a is 2 or 3, A is a polyisobutylene, and X is a chlorine.

The compound represented by the formula (2), which is a substrate caused to act on the halogen-terminated hydrocarbon polymer, is not particularly restricted insofar as it is a 1-substituted or 1,1'-disubstituted olefin terminally having a hydroxyl group, but in terms of the level of reactivity, 1-methyl-1'-hydroxyl terminated alkylethylenes are preferred as 1-substituted or disubstituted olefins. Among these, allyl alcohol, methallyl alcohol, 3-buten-1-ol, 4-penten-1-ol, 5-hexen-1-ol, 6-hepten-1-ol, 7-octen-1-ol, 8-nonen-1-ol, 9-decen-1-ol and 10-undecen-1-ol are particularly preferred.

When the halogen-terminated hydrocarbon polymer of the above formula (1) as obtained by cationic polymerization is reacted with a compound having both a primary hydroxyl group and a carbon-carbon double bond, which is represented by the above formula (2), a Lewis acid can be used as a catalyst. The catalyst is not particularly restricted insofar as it is a Lewis acid but in the view of the level of reactivity, TiCl₄, AlCl₃, BCl₃ and SnCl₄ are preferred.

In the present invention, one or mixed solvent selected from the group consisting of halogenated hydrocarbons, aromatic hydrocarbons and aliphatic hydrocarbons can be used as a reaction solvent. However, in view of the solubility and the reactivity under polymerization conditions of the polymer, as the halogenated hydrocarbons, one composed of one or more components selected from the group consisting of methylene chloride, chloroform, 1,1-dichloroethane, 1,2-dichloroethane, n-propyl chloride and n-butyl chloride is preferred. For the same reason, as the aromatic hydrocarbon, toluene is preferred, and as the aliphatic hydrocarbon, one or more components selected form the group consisting of pentane, n-hexane, cyclohexane, methylcyclohexane and ethylcyclohexane are preferred.

As the reaction solvent not involving a halogenated hydrocarbon which has a risk for adverse effects on the environment, toluene and ethylcyclohexane can also be employed.

Furthermore, the introduction efficiency of a hydroxyl group into the terminus can be improved by causing pyridine, 2-methylpyridine, 3-methylpyridine, 4-methylpyridine or 2,6-di-t-butylpyridine to coexist in the reaction system.

The production method of a saturated hydrocarbon polymer terminally having a hydroxyl group according to the invention can be carried out as follows, for instance. First of all, a saturated hydrocarbon polymer terminally having a halogen group represented by the formula (1) and 1 to 4 equivalents, based on the halogen terminus, of an olefin compound terminally having a primary hydroxyl group represented by the formula (2) are dissolved in a solvent composed of one or more components selected from among chloroform, methylene chloride, 1,1-dichloroethane, 1,2-dichloroethane, n-propyl chloride, n-butyl chloride, toluene, pentane, n-hexane, cyclohexane, methylcyclohexane and ethylcyclohexane. To this solution is added an electron donor such as pyridine, 2-methylpyridine, 3-methylpyridine, 4-methylpyridine, or 2,6-di-t-butylpyridine, and within the temperature range of -100°C to -30°C, a Lewis acid catalyst such as TiCl₄, AlCl₃, BCl₃, or SnCl₄ is added. The reaction is conducted for 30 minutes to 5 hours, whereby the desired saturated hydrocarbon polymer terminally having a hydroxyl group can be obtained.

Meanwhile, it is generally known that a hydroxyl group-containing compound reacts with a Lewis acid to give a hydrogen halide. The inventors' investigation revealed that under the reaction conditions of reacting a hydroxyl group-containing olefin compound with the terminus of a halogen-terminated hydrocarbon polymer, the addition reaction of the hydrogen halide to the olefin takes place as a side reaction. Since the hydrogen halide-added substrate cannot react with the polymer terminus, the occurrence of this side reaction detracts remarkably from the efficiency of hydroxyl group introduction reaction.

The addition reaction of the hydrogen halide to the olefin can be suppressed by trapping the hydrogen halide in the system with a base. As the base component, both an organic base and an inorganic base can be employed but an organic base soluble in the reaction solvent is preferred. In view of the level of hydroxyl group introduction efficiency, pyridine or pyridine derivatives such as 2-methylpyridine, 3-methylpyridine, 4-methylpyridine or 2,6-di-t-butylpyridine is preferred. As to the level of addition, because the balance between reaction rate and hydroxyl group introduction efficiency is good, 0.05 to 10 equivalents per terminal halogen group of the saturated hydrocarbon polymer is preferred. Meanwhile, the catalyst activity of the Lewis acid decreases as it reacts with a hydroxyl group-containing olefin compound. Therefore, in conducting the addition reaction, it is preferred to use more than an equivalent amount of the Lewis acid relative to the hydroxyl group-containing olefin compound. On the other hand, the inventors' investigations also revealed that the addition of the Lewis acid in a large excess leads to a slight reduction in the amount of introduction of hydroxyl group. Therefore, the preferred amount of the Lewis acid is 1 to 20 equivalents in molar ratio relative to the compound having both a primary hydroxyl group and a carbon-carbon double bond.

The Lewis acid for use in the invention can be used in living cationic polymerization by the inifer method as well. First, a halogen group-terminated polymer is prepared by the inifer method and, then, without treating the reaction solution, a primary hydroxyl group can be introduced terminally in a one-pot system by adding the compound having both a primary hydroxyl group and a carbon-carbon double bond, if necessary, as well as a Lewis acid and an electron donor.

In the formula (1), R¹ is the residue of a polymerization initiator and, it is not particularly restricted insofar as it is the residue of an initiator of univalent to tetravalent functionality that can be used in living cationic polymerization by the inifer method, however, the preferred number of the functional group of the initiator is 2 or 3. As compounds showing high initiator efficiencies at polymerization, the following compounds having a substituted group in a benzyl position are preferred. 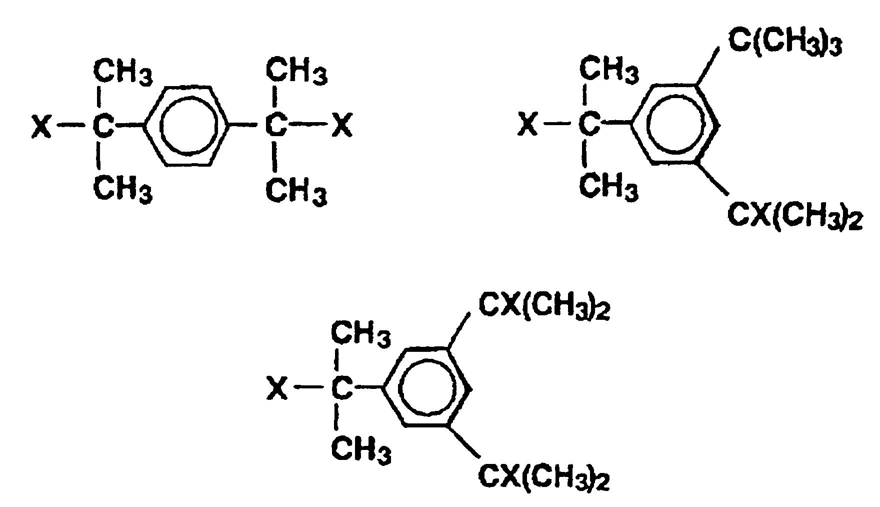 (in the formula, X represents a chlorine, bromine, methoxy or acetyl group).

The reaction solvent is not particularly restricted insofar as it is the solvent mentioned above but is preferably the same as the polymerization reaction solvent, for the hydroxyl group may be introduced in a one-pot system after polymerization reaction. As the reaction solvent in common for the polymerization reaction and the hydroxyl group introduction reaction into the terminus, one or mixed solvent optionally selected from among halogenated hydrocarbons, aromatic hydrocarbons and aliphatic hydrocarbons can be used. In view of the solubility and reactivity under polymerization conditions of the polymer, the halogenated hydrocarbon is preferably one or more components selected from among methylene chloride, chloroform, 1,1-dichloroethane, 1,2-dichloroethane, n-propyl chloride and n-butyl chloride. For the same reason, as the aromatic hydrocarbon, toluene is preferred and as the aliphatic hydrocarbon, one or more components selected from among pentane, n-hexane, cyclohexane, methylcyclohexane, and ethylcyclohexane are preferred.

In recent years, the halogen-free solvent is an important technology from environmental points of view. In the present invention, by carrying out the polymerization in a mixed solvent system of toluene and ethylcyclohexane, a polymer having narrow molecular weight distribution can be obtained and the addition reaction of the compound having both a primary hydroxyl group and a carbon-carbon double bond can also proceed promptly under the same condition. In view of the good polymerizability and good solubility of the polymer at low temperature, the preferred mixing ratio of solvents is toluene: ethylcyclohexane=6:4 to 9 : 1 (by weight ratio).

The following examples illustrate the present invention in further detail, however, that these examples are by no means limitative to the scope of the invention.

### Example 1

A 500 ml separable flask was equipped with a three-way cock, a thermocouple and a stirrer with a vacuum seal, followed by nitrogen purging. This flask was charged with 175 ml of toluene and 21.7 ml of ethylcyclohexane, dehydrated with molecular sieves 3A, further charged with 1,4-bis(1-chloro-1-methylethyl)benzene (1.63 g, 7.04 mmol) and 2-methylpyridine (77.4 mg, 0.83 mmol) and cooled to -70°C. After cooling, isobutylene monomer (35.5 mol, 598 mmol) was introduced and, then, titanium tetrachloride (0.98 ml, 8.93 mmol) was added at the same temperature to initiate polymerization. In the course, the temperature rose by about 15°C. The polymerization went to completion in about 40 minutes (accordingly, the evolution of heat in the reaction system was no longer observed). After completion of polymerization, 9-decen-1-ol (5.1 ml, 28.2 mmol) and titanium tetrachloride (5.7 ml, 51.7 mmol) were added. After 1 hour of reaction, the reaction mixture was poured in 300 ml of ion-exchange water heated to 80°C and was transferred to a 1 L separatory funnel and shaken. After removing the water layer and washing with 300 ml of ion-exchange water three times, the organic layer was isolated and was added 1 L of acetone to reprecipitate the polymer, and the unreacted 9-decen-1-ol was removed. The precipitate was further washed twice with 100 ml of acetone and dissolved in 50 ml of hexane. The solution was transferred to a 300 ml-volume eggplant-shaped flask and the solvent was distilled off under heating condition on an oil bath (180°C) and under reduced pressure (final ≤ 1 Torr) to give the desired polyisobutylene terminally having a hydroxyl group.

The analysis of molecular weight and functionalization rate of the polyisobutylene thus obtained were carried out by GPC and NMR.

### (GPC system)

GPC: Waters System (Pump 600E, differential refractometer 401), column: Showa Denko's Shodex K-804 (polystyrene gel), mobile phase: chloroform, number average molecular weight on a polystyrene basis.

### (NMR)

Valian's Gemini-300, measurement solvent: carbon tetrachloride/deuterioacetone = 4/1 mixed solvent, method for assay: based on the signal of initiator residue (7.2 ppm), the area of terminal hydroxymethyl group (3.45 ppm) was compared.

The results are summarized in Table 1. In the table, TiCl₄ (total) denotes the amount of titanium tetrachloride present in the system at the 9-decen-1-ol addition reaction, and PDI denotes the degree of distribution which is the (weight average molecular weight)/(number average molecular weight) as determined by GPC. Fn (CH₂OH) represents the amount of introduction of hydroxyl group and is equal to 2.0 for the initiator used here when introduced quantitatively. The results are summarized in Table 1.

### Example 2

Except that the amount of 9-decen-1-ol was changed to 2.55 ml (14.1 mmol), the same procedure as Example 1 was carried out. The results are summarized in Table 1.

### Example 3

Except that the amount of 9-decen-1-ol was changed to 10.2 ml (56.4 mmol), the same procedure as Example 1 was carried out. The results are summarized in Table 1.

### Example 4

Except that the amount of addition of titanium tetrachloride at addition of 9-decen-1-ol was set to 2.1 ml (19.2 mmol), the same procedure as Example 1 was carried out. The results are summarized in Table 1.

### Example 5

Except that the amount of addition of titanium tetrachloride at addition of 9-decen-1-ol was set to 3.65 ml (33.3 mmol), the same procedure as Example 1 was carried out. The results are summarized in Table 1.

### Example 6

Except that the amount of addition of titanium tetrachloride at addition of 9-decen-1-ol was set to 11.4 ml (94.5 mmol), the same procedure as Example 1 was carried out. The results are summarized in Table 1.

**Table 1**

| Results of one-pot synthetic reaction of hydroxyl group-terminated polyisobutylene | | | | | |
|---|---|---|---|---|---|
| Example | 9-decen-1-ol | TiCl₄ (total) | Mn (GPC) | PDI | Fn (CH₂OH) |
| 1 | 28.2 mmol | 60.6 mmol | 4504 | 1.30 | 1.85 |
| 2 | 14.1 mmol | 60.6 mmol | 4610 | 1.41 | 1.21 |
| 3 | 56.4 mmol | 60.6 mmol | 5311 | 1.34 | 1.91 |
| 4 | 28.2 mmol | 28.2 mmol | ---- | ---- | 0.50 |
| 5 | 28.2 mmol | 42.2 mmol | ---- | ---- | 1.74 |
| 6 | 28.2 mmol | 103.4 mmol | 4552 | 1.38 | 1.71 |

### Example 7

A 500 ml separable flask was equipped with a three-way cock, a thermocouple and a stirrer with a vacuum seal, followed by nitrogen purging. This flask was charged with 175 ml of toluene and 21.7 ml of ethylcyclohexane, dehydrated with molecular sieves 3A, and further charged with 1,4-bis(1-chloro-2-methylethyl)benzene (1.63 g, 7.04 mmol) and 2-methylpyridine (77.4 mg, 0.83 mmol) and cooled to -70°C. After cooling, isobutylene monomer (35.5 mol, 598 mmol) was introduced and, then, titanium tetrachloride (0.98 ml, 8.93 mmol) was added at the same temperature to initiate polymerization. In the course, the temperature rose by about 15°C. The polymerization went to completion in about 40 minutes (accordingly, the evolution of heat in the reaction system was no longer observed). After completion of polymerization, the reaction mixture was poured in 300 ml of ion-exchange water heated to 80°C and was transferred to a 1 L separatory funnel and shaken. After removing the water layer and washing with 300 ml of ion-exchange water three times, the organic layer was isolated and was added 1 L of acetone to reprecipitate the polymer, and the precipitate was further washed twice with 100 ml of acetone and dissolved in 50 ml of hexane. The solution was transferred to a 300 ml-volume eggplant-shaped flask and the solvent was distilled off under heating condition on an oil bath (80°C) and under reduced pressure (final ≤ 1 Torr) to give a polyisobutylene terminally having a chlorine group.
Analytical result: Mn (GPC) = 5402, PDI = 1.33

### Example 8

A 200 ml 3-necked round-bottom flask was equipped with a three-way cock, a thermocouple and a stirrer with a vacuum seal, followed by nitrogen purging. This flask was charged with 24 ml of toluene and 6 ml of ethylcyclohexane, dehydrated with molecular sieves 3A, and further charged with the polyisobutylene obtained in Example 7 (4.33 g, 0.87 mmol) dissolved in 6 ml of ethylcyclohexane and 9-decen-1-ol (1.35 ml, 8.66 mmol) andcooled to -70°C. After cooling, titanium tetrachloride (2ml, 18.3mmol) was added. After 5 hours of reaction, the reaction mixture was poured in 100 ml of ion-exchange water heated to 80°C and was transferred to a 500 ml separatory funnel and shaken. After removing the water layer and washing with 100 ml of ion-exchange water three times, the organic layer was isolated and was added 300 ml of acetone to reprecipitate the polymer, and the unreacted 9-decen-1-ol was removed. The precipitate was further washed twice with 100 ml of acetone and dissolved in 10 ml of hexane. The solution was transferred to a 300 ml-volume eggplant-shaped flask and the solvent was distilled off under heating condition on an oil bath (180°C) and under reduced pressure (final ≤ 1 Torr) to give the desired polyisobutylene terminally having a hydroxyl group. The amount of introduction of hydroxyl group of thus-obtained polymer was: Fn (CH₂OH) = 1.60.

### Example 9

Except that 2.55 g (27.4 mmol) of picoline was added at addition of 9-decen-1-ol, the same procedure as Example 2 was carried out. The amount of introduction of hydroxyl group of the resulting polymer was: Fn (CH₂OH) = 1.39 (in Example 2, it was 1.21 and the functionalization of hydroxyl group was increased by addition of picoline).

### Example 10

Except that the amount of reagents are changed as 2.75 g (0.51 mmol) of the polyisobutylene obtained in Example 7, 12 ml of toluene and 3 ml of ethylcyclohexane and that 5-hexen-1-ol (0.50 ml, 4.2 mmol) was added in lieu of 9-decen-1-ol, the same procedure as Example 8 was carried out. The amount of introduction of hydroxyl group of the resulting polymer was: Fn (CH₂OH) = 1.60.

The polymer obtainable in accordance with the invention is a novel saturated hydrocarbon polymer terminally having a primary hydroxyl group. By the novel synthetic method, a hydroxyl group can be introduced efficiently in a one-pot system without requiring solvent exchange, removal of the catalyst, and other special procedures following polymerization. The hydrocarbon polymer of which a polymer main chain is saturated and terminally having a hydroxyl group as obtained by the method of the invention can be reacted with a polyisocyanate to give a urethane resin with high weathering resistance.

## Claims

1. A hydrocarbon polymer of which a polymer main chain is a saturated hydrocarbon chain and which terminally has a primary hydroxyl group
which is obtainable by reacting a halogen-terminated hydrocarbon polymer with a compound having both a primary hydroxyl group and a carbon-carbon double bond,
said halogen-terminated hydrocarbon polymer being obtainable by cationic polymerization forming a carbon-carbon single bond.

2. The polymer according to Claim 1,
wherein the halogen-terminated hydrocarbon polymer obtainable by cationic polymerization is represented by the formula (1):
R¹(A-X)ₐ (1)
in the formula, R¹ represents a univalent to tetravalent hydrocarbon group containing one or more aromatic rings; X represents a chlorine or bromine atom; a represents an integer of 1 to 4; A represents a polymer of one or two or more cation-polymerizable monomers and when a is not less than 2, A may be the same or different,
and the compound having both a primary hydroxyl group and a carbon-carbon double bond is represented by the formula (2) :
CH₂=C(R²)-B-CH₂OH (2)
in the formula, R² represents a hydrogen or a saturated hydrocarbon group of 1 to 18 carbon atoms and B represents a direct bond or a bivalent hydrocarbon group of 1 to 30 carbon atoms.

3. The polymer according to Claim 2,
wherein the compound having both a primary hydroxyl group and a carbon-carbon double bond is represented by the formula (3) :
CH₂=C(R²)-(CH₂)ₙ-CH₂OH (3)
in the formula, R² represents a hydrogen or a saturated hydrocarbon group of I to 18 carbon atoms and n represents an integer of 0 to 30.

4. The polymer according to Claim 2 or 3 ,
wherein the halogen-terminated hydrocarbon polymer obtainable by cationic polymerization as represented by said formula (1) is an isobutylene polymer.

5. The polymer according to any one of Claims 2 to 4,
wherein, referring to said formula (1), a is 2 or 3, A is a polyisobutylene and X is a chlorine.

6. The polymer according to any one of Claims 1 to 5,
wherein the compound having both a primary hydroxyl group and a carbon-carbon double bond is selected from the group consisting of allyl alcohol, methallyl alcohol, 3-buten-1-ol, 4-penten-1-ol, 5-hexen-1-ol, 6-hepten-1-ol, 7-octen-1-ol, 8-nonen-1-ol, 9-decen-1-ol and 10-undecen-1-ol.

7. A production method of the hydrocarbon polymer of which a polymer main chain is a saturated hydrocarbon chain and which terminally has a primary hydroxyl group according to any one of Claims 1 to 6,
which comprises using a Lewis acid as a catalyst at the step of the reaction between a halogen-terminated hydrocarbon polymer obtainable by cationic polymerization forming a carbon-carbon single bond and a compound having both a primary hydroxyl group and a carbon-carbon double bond.

8. The production method according to Claim 7,
wherein the catalyst is at least one species of Lewis acid selected from among TiCl₄, AlCl₃, BCl₃ and SnCl₄.

9. The production method according to Claim 7 or 8,
wherein one or mixed solvent selected from the group consisting of a halogenated hydrocarbon, an aromatic hydrocarbon and an aliphatic hydrocarbon is used as a reaction solvent.

10. The production method according to Claim 9,
wherein the halogenated hydrocarbon is one composed of at least one component selected from the group consisting of chloroform, methylene chloride, 1,1-dichloroethane, 1,2-dichloroethane, n-propyl chloride and n-butyl chloride.

11. The production method according to Claim 9,
wherein the aromatic hydrocarbon is toluene.

12. The production method according to Claim 9,
wherein the aliphatic hydrocarbon is one composed of at least one component selected from the group consisting of pentane, n-hexane, cyclohexane, methylcyclohexane and ethylcyclohexane.

13. The production method according to Claim 9,
wherein a mixed solvent of toluene and ethylcyclohexane is used as the reaction solvent.

14. The production method according to any one of Claims 7 to 13,
wherein at least one compound selected from the group consisting of pyridine, 2-methylpyridine, 3-methylpyridine, 4-methylpyridine and 2,6-di-t-butylpyridine is caused to coexist with the Lewis acid.

## Patentansprüche

1. Kohlenwasserstoff-Polymer, dessen Polymer-Hauptkette eine gesättigte Kohlenwasserstoffkette ist und welches eine endständige primäre Hydroxylgruppe aufweist;
welches durch Umsetzen eines Kohlenwasserstoff-Polymers mit endständigem Halogenatom mit einer Verbindung, die sowohl eine primäre Hydroxylgruppe als auch eine Kohlenstoff-Kohlenstoff-Doppelbindung aufweist, erhältlich ist,
wobei das Kohlenwasserstoff-Polymer mit endständigem Halogenatom durch kationische Polymerisation unter Bildung einer Kohlenstoff-Kohlenstoff-Einfachbindung erhältlich ist.

2. Polymer nach Anspruch 1, wobei das durch kationische Polymerisation erhältliche Kohlenwasserstoff-Polymer mit endständigem Halogenatom durch die Formel (1) dargestellt ist:
R¹(A-X)ₐ (1)
wobei in der Formel R¹ einen einwertigen bis vierwertigen Kohlenwasserstoffrest bedeutet, der ein oder mehrere aromatische Ringe enthält; X ein Chlor- oder Bromatom darstellt; a eine ganze Zahl von 1 bis 4 darstellt; A ein Polymer aus einem oder zwei oder mehr kationisch polymerisierbaren Monomeren bedeutet und wenn a nicht kleiner als 2 ist, A gleich oder verschieden sein kann,
und wobei die Verbindung, die sowohl eine primäre Hydroxylgruppe als auch eine Kohlenstoff-Kohlenstoff-Doppelbindung aufweist, durch die Formel (2) dargestellt ist:
CH₂=C(R²)-B-CH₂OH (2)
wobei in der Formel R² ein Wasserstoffatom oder einen gesättigten Kohlenwasserstoffrest mit 1 bis 18 Kohlenstoffatomen bedeutet und B eine direkte Bindung oder einen zweiwertigen Kohlenwasserstoffrest mit 1 bis 30 Kohlenstoffatomen bedeutet.

3. Polymer nach Anspruch 2, wobei die Verbindung, die sowohl eine primäre Hydroxylgruppe als auch eine Kohlenstoff-Kohlenstoff-Doppelbindung aufweist, durch die Formel (3) dargestellt ist:
CH₂=C(R²)-(CH₂)ₙ-CH₂OH (3)
wobei in der Formel R² ein Wasserstoffatom oder einen gesättigten Kohlenwasserstoffrest mit 1 bis 18 Kohlenstoffatomen bedeutet und n eine ganze Zahl von 0 bis 30 darstellt.

4. Polymer nach Anspruch 2 oder 3, wobei das Kohlenwasserstoff-Polymer mit endständigem Halogenatom, das durch kationische Polmyerisation erhältlich ist, wie durch die Formel (1) dargestellt, ein Isobutylen-Polymer ist.

5. Polymer nach einem der Ansprüche 2 bis 4, wobei, mit Bezug auf die Formel (1), a gleich 2 oder 3 ist, A ein Polyisobutylen ist und X ein Chloratom ist.

6. Polymer nach einem der Ansprüche 1 bis 5, wobei die Verbindung, die sowohl eine primäre Hydroxylgruppe als auch eine Kohlenstoff-Kohlenstoff-Doppelbindung aufweist, aus Allylalkohol, Methallylalkohol, 3-Buten-1-ol, 4-Penten-1-ol, 5-Hexen-1-ol, 6-Hepten-1-ol, 7-Octen-1-ol, 8-Nonen-1-ol, 9-Decen-1-ol und 10-Undecen-1-ol ausgewählt ist.

7. Herstellungsverfahren für das Kohlenwasserstoff-Polymer, dessen Polymer-Hauptkette eine gesättigte Kohlenwasserstoffkette ist und welches eine endständige primäre Hydroxylgruppe aufweist, nach einem der Ansprüche 1 bis 6,
welches die Verwendung einer Lewis-Säure als Katalysator beim Schritt der Umsetzung zwischen einem Kohlenwasserstoff-Polymer mit endständigem Halogenatom, erhältlich durch kationische Polymerisation unter Bildung einer Kohlenstoff-Kohlenstoff-Einfachbindung, und einer Verbindung, die sowohl eine primäre Hydroxylgruppe als auch eine Kohlenstoff-Kohlenstoff-Doppelbindung aufweist, umfaßt.

8. Herstellungsverfahren nach Anspruch 7, wobei der Katalysator mindestens eine Spezies einer Lewis-Säure, ausgewählt aus TiCl₄, AlCl₃, BCl₃ und SnCl₄, ist.

9. Herstellungsverfahren nach Anspruch 7 oder 8, wobei ein Lösungsmittel oder Lösungsmittelgemisch, ausgewählt aus einem halogenierten Kohlenwasserstoff, einem aromatischen Kohlenwasserstoff und einem aliphatischen Kohlenwasserstoff, als Reaktionslösungsmittel verwendet wird.

10. Herstellungsverfahren nach Anspruch 9, wobei der halogenierte Kohlenwasserstoff einer ist, der aus mindestens einer Komponente, ausgewählt aus Chloroform, Methylenchlorid, 1,1-Dichlorethan, 1,2-Dichlorethan, n-Propylchlorid und n-Butylchlorid, zusammengesetzt ist.

11. Herstellungsverfahren nach Anspruch 9, wobei der aromatische Kohlenwasserstoff Toluol ist.

12. Herstellungsverfahren nach Anspruch 9, wobei der aliphatische Kohlenwasserstoff einer ist, der aus mindestens einer Komponente, ausgewählt aus Pentan, n-Hexan, Cyclohexan, Methylcyclohexan und Ethylcyclohexan, zusammengesetzt ist.

13. Herstellungsverfahren nach Anspruch 9, wobei ein Lösungsmittelgemisch aus Toluol und Ethylcyclohexan als Reaktionslösungsmittel verwendet wird.

14. Herstellungsverfahren nach einem der Ansprüche 7 bis 13, wobei dafür gesorgt wird, daß mindestens eine Verbindung, ausgewählt aus Pyridin, 2-Methylpyridin, 3-Methylpyridin, 4-Methylpyridin und 2,6-Di-t-butylpyridin, gleichzeitig mit der Lewis-Säure vorhanden ist.

## Revendications

1. Polymère d'hydrocarbure dont une chaîne polymère principale est une chaîne hydrocarbonée saturée et qui porte en position terminale un groupe hydroxyle primaire,
qui peut être obtenu par réaction d'un polymère hydrocarboné se terminant par un halogène avec un composé ayant à la fois un groupe hydroxyle primaire et une double liaison carbone-carbone,
ledit polymère hydrocarboné se terminant par un halogène pouvant être obtenu par polymérisation cationique formant une simple liaison carbone-carbone.

2. Polymère selon la revendication 1, dans lequel le polymère hydrocarboné se terminant par un halogène pouvant être obtenu par polymérisation cationique est représenté par la formule (1) :
R¹(A-X)ₐ (1)
dans la formule, R¹ représente un groupe hydrocarboné univalent à tétravalent contenant un ou plusieurs cycles aromatiques ; X représente un atome de chlore ou de brome; a représente un entier de 1 à 4 ; A représente un polymère de un ou deux monomères polymérisables par polymérisation cationique ou plus, et si a n'est pas inférieur à 2, les A peuvent être identiques ou différents,
et le composé ayant à la fois un groupe hydroxyle primaire et une double liaison carbone-carbone est représenté par la formule (2) :
CH₂=C(R²)-B-CH₂OH (2)
dans la formule, R² représente un hydrogène ou un groupe hydrocarboné saturé de 1 à 18 atomes de carbone et B représente une liaison directe ou un groupe hydrocarboné bivalent de 1 à 30 atomes de carbone.

3. Polymère selon la revendication 2, dans lequel le composé ayant à la fois un groupe hydroxyle primaire et une double liaison carbone-carbone est représenté par la formule (3) :
CH₂=C(R²)-(CH₂)ₙ-CH₂OH (3)
dans la formule, R² représente un hydrogène ou un groupe hydrocarboné saturé de 1 à 18 atomes de carbone et représente un entier de 0 à 30.

4. Polymère selon la revendication 2 ou 3, dans lequel le polymère hydrocarboné se terminant par un halogène pouvant être obtenu par polymérisation cationique tel que représenté par ladite formule (1) est un polymère d'isobutylène.

5. Polymère selon l'une quelconque des revendications 2 à 4, dans lequel, dans ladite formule (1), a est 2 ou 3, A est un polyisobutylène et X est un chlore.

6. Polymère selon l'une quelconque des revendications 1 à 5, dans lequel le composé ayant à la fois un groupe hydroxyle primaire et une double liaison carbone-carbone est choisi dans le groupe constitué par l'alcool allylique, l'alcool méthallylique, le 3-butén-1-ol, le 4-pentén-1-ol, le 5-hexén-1-ol, le 6-heptén-1-ol, le 7-octén-1-ol, le 8-nonén-1-ol, le 9-décèn-1-ol et le 10-undécèn-1-ol.

7. Méthode de production du polymère d'hydrocarbure dont une chaîne polymère principale est une chaîne hydrocarbonée saturée et porte en position terminale un groupe hydroxyle primaire selon l'une quelconque des revendications 1 à 6,
qui comprend l'utilisation d'un acide de Lewis en tant que catalyseur dans l'étape de la réaction entre un polymère hydrocarboné se terminant par un halogène pouvant être obtenu par polymérisation cationique formant une simple liaison carbone-carbone et un composé ayant à la fois un groupe hydroxyle primaire et une double liaison carbone-carbone.

8. Méthode de production selon la revendication 7, dans laquelle le catalyseur est au moins une espèce d'acide de Lewis choisie parmi TiCl₄, AlCl₃, BCl₃ et SnCl₄.

9. Méthode de production selon la revendication 7 ou 8, dans laquelle un solvant ou un solvant mixte choisi dans le groupe constitué par un hydrocarbure halogéné, un hydrocarbure aromatique et un hydrocarbure aliphatique est utilisé comme solvant de réaction.

10. Méthode de production selon la revendication 9, dans laquelle l'hydrocarbure halogéné est un produit composé d'au moins un composant choisi dans le groupe constitué par le chloroforme, le chlorure de méthylène, le 1,1-dichloroéthane, le 1,2-dichloroéthane, le chlorure de n-propyle et le chlorure de n-butyle.

11. Méthode de production selon la revendication 9, dans laquelle l'hydrocarbure aromatique est le toluène.

12. Méthode de production selon la revendication 9, dans laquelle l'hydrocarbure aliphatique est un produit composé d'au moins un composant choisi dans le groupe constitué par le pentane, le n-hexane, le cyclohexane, le méthylcyclohexane et l'éthylcyclohexane.

13. Méthode de production selon la revendication 9, dans laquelle un solvant mixte constitué par le toluène et l'éthylcyclohexane est constitué comme solvant de réaction.

14. Méthode de production selon l'une quelconque des revendications 7 à 13, dans laquelle on fait co-exister, avec l'acide de Lewis, au moins un composé choisi dans le groupe constitué par la pyridine, la 2-méthylpyridine, la 3-méthylpyridine, la 4-méthylpyridine et la 2,6-di-t-butylpyridine.
